# EUROPÄISCHE PATENTSCHRIFT

(11) **EP 2 548 771 B1**
(45) Veröffentlichungstag und Bekanntmachung des Hinweises auf die Patenterteilung: **11.09.2013**
(21) Anmeldenummer: 12007124.6
(22) Anmeldetag: 19.11.2010
(51) Int. Cl.: B60R 11/04, G03B 17/08

(54) **Kameraeinrichtung zur Bilderfassung eines Außenbereichs an einem Fahrzeug**
Camera device for image pickup of an outside area of a vehicle
Dispositif de caméra pour capture d'image de l'extérieur d'un véhicule

(30) Priorität: 22.12.2009 DE 102009060425
(43) Veröffentlichungstag der Anmeldung: 23.01.2013
(62) Teilanmeldung aus: 10788007.2
(73) Patentinhaber: Huf Hülsbeck & Fürst GmbH & Co. KG, 42551 Velbert (DE)
(72) Erfinder: Ulomek, Peter, 42477 Radevormwald (DE); Buschmann, Gerd, 42553 Velbert (DE); Schütz, Heiko, 42549 Velbert (DE)

(56) Entgegenhaltungen:
- EP-A1- 1 529 688
- DE-A1- 3 900 667
- DE-A1-102005 014 791

## Beschreibung

Die Erfindung betrifft eine Vorrichtung gemäß dem Oberbegriff des Anspruchs 1. Eine solche Kameraeinrichtung wird zur Bilderfassung eines Außenbereichs an einem Fahrzeug verwendet, insbesondere zur Bilderfassung des Bereichs hinter dem Fahrzeug, vorzugsweise beim Rückwärtsfahren. Solche Kameraeinrichtungen sind bereits bekannt. Die Kamera verfügt über eine Einfahrlage, in welcher sie zumindest bereichsweise in einem Raum, dem Kameraraum, angeordnet ist, welcher gegenüber dem Außenbereich mit einer Klappe oder Ähnlichem verschlossen ist und über eine Ausfahrlage, in welcher sie Bilder des Außenbereichs erfassen kann. Dies hat den Vorteil, dass die Kamera während des üblichen Fahrbetriebs des Fahrzeugs nicht verschmutzt wird.

Die EP 1 529 688 A1, die den Oberbegriff des Anspruchs 1 bildet, beschreibt eine Kameraanordnung für Kraftfahrzeuge. Diese Kamera ist zwischen einer Einfahrlage und einer Ausfahrlage beweglich. Die Kamera ist in einem Gehäuse angeordnet, welches über einen Führungsschlitz verfügt, durch welchen die elektrischen Leitungen der Kamera geführt werden. Alternativ kann auch auf den Führungsschlitz verzichtet werden und das Gehäuse geschlossen ausgebildet sein. In diesem Fall ist die Leitung der Kamera unbeweglich durch die Schutzwandlung geführt und im Inneren des Gehäuses entsprechend lang und flexibel ausgebildet. Nachteilig an dieser Anordnung ist es jedoch, dass gerade beim Rückwärtsfahren aus dem Auspuff austretende Abgase über das Kameragehäuse in den Innenraum des Fahrzeugs eindringen können. Dies ist insbesondere dann problematisch, wenn in dem Bereich hinter der Heckklappe Personen befindlich sind oder Tiere, wie beispielsweise Hunde, sich im Kofferraum aufhalten. Die Abgase sind giftig und könnten dann von den entsprechenden Personen oder Tieren eingeamtet werden, was zu gesundheitlichen Schäden führen kann. Wird die Kamera in dem Gehäuse gekapselt, muss eine entsprechend lange Kameraleitung in dem Gehäuse vorgesehen sein, damit die Kamera die notwendige Bewegung durchführen kann. Dies erhöht jedoch die Bauhöhe des Gehäuses, was ebenfalls problematisch ist, da in diesem Bereich normalerweise wenig Bauraum verfügbar ist.

Die DE 10 2005 014 791 A1 offenbart eine Kameravorrichtung mit einem Kameragehäuse und einem Kamerakörper, der von einer externen Energiequelle versorgt wird und der luftdicht ein Kameragehäuse aufgenommen ist. Die DE 3900 667 A1 offenbart ein Perskop zur Sichtverbesserung, wobei eine Videokamera mittels einer beweglichen Halterung aus dem Innenraum eines Fahrzeugs ausfahrbar gelagert ist.

Aufgabe der Erfindung ist es daher eine Kameraeinrichtung für Fahrzeuge zu schaffen, welche einerseits verhindert, dass Gase, insbesondere Abgas, aber auch Flüssigkeiten in den Innenraum des Fahrzeugs eindringen können und welches anderseits eine kompakte Bauweise ermöglicht. Diese Aufgabe wird durch die kennzeichnenden Merkmale des Anspruchs 1 gelöst.

Gemäß Anspruch 1 ist die Kameraeinrichtung so ausgebildet, dass die Energieversorgung der Kamera und/oder des Antriebs auf induktive Weise erfolgt, bzw. dass die Datenübertragung der Kamera über elektromagnetische Wellen erfolgen kann. Die Kamera kann im Kameraraum gekapselt sein, indem der bzw. die Gehäusebauteile als fluiddichtes Gehäuse ausgeführt sind. Dieses Gehäuse dichtet dann den Kameraraum gegenüber dem Innenraum fluiddicht ab. Anschlüsse oder elektrische Leitungen der Kamera bzw. des Antriebs müssen dann nicht durch das Gehäuse geführt werden. Es ist damit auch möglich das Gehäuse aus einem starren Material zu fertigen. Das Gehäuse muss so keine Bewegungen der Kamera mit durchführen. Selbstverständlich ist es hierbei auch möglich, den Antrieb außerhalb des Gehäuses vorzusehen.

Bei der erfindungsgemäßen Kameraeinrichtung ist bevorzugter weise ein Antrieb vorgesehen, welcher die Kamera in ihrer Verfahrbewegung bewegt. Er kann somit dafür sorgen, dass die Kamera von der Einfahr- in die Ausfahrlage und/oder von der Ausfahr- in die Einfahrlage bewegt wird. Der Antrieb kann sich dabei entweder auf der gleichen Seite des Gehäusebauteils wie die Kamera befinden oder auch auf gegenüberliegenden Seite. Ist der Antrieb auf der gleichen Seite vorgesehen wie Kamera und befinden sich beide im Kameraraum, so kann der Antrieb induktiv mit Strom versorgt werden. Hierbei sind nahezu alle Möglichkeiten denkbar. Der Antrieb kann sich jedoch auch auf der gegenüberliegenden Seite des Gehäusebauteils wie die Kamera befinden. Hier könnte beispielsweise die Kamera im Kameraraum

selbst angebracht sein. Ob der Antrieb sich auf der gleichen Seite wie die Kamera oder auf der gegenüberliegenden Seite befindet hängt vom jeweiligen Anwendungsfall ab.

Im Kameraraum kann zusätzlich ein Ablauf wie eine Rinne, ein Schlauch oder Ähnliches vorgesehen sein, durch welchen im Kameraraum befindliche Feuchtigkeit in den Außenbereich führbar ist. Befindet sich die Kamera in ihrer Ausfahrlage, so ist es möglich, dass Feuchtigkeit wie beispielsweise Niederschlag, Spritzwasser oder Ähnliches in den Kameraraum gelangen. Wenn die Kamera dann wieder in ihre Einfahrlage gebracht wird, kann es sein, dass sich die Feuchtigkeit im Linsenbereich der Kamera niederschlägt, was die Qualität der Bilderfassung mindert. Um dies zu vermeiden kann am Kameraraum eine Ablaufrinne vorgesehen sein. Über diese kann dann eventuelle im Kameraraum befindliche Feuchtigkeit in den Außenbereich geführt werden. Selbstverständlich ist es auch möglich, einen Schlauch, ein Rohr oder Ähnliches vorzusehen, welcher eine Verbindung zwischen Kameraraum und Außenbereich herstellt und so einen Ablauf für eventuelle im Kameraraum befindliche Feuchtigkeit schafft.

Weitere Vorteile und Ausführungsformen der Erfindung ergeben sich aus den Unteransprüchen, der nachfolgenden Beschreibung, sowie den Zeichnungen. In den Zeichnungen ist die Erfindung in drei Ausführungsformen dargestellt. Es zeigen,
- Fig. 1:: Eine nicht erfindungsgemäße Ausführungsform gemäß Anspruch 1 in Einfahrlage im Schnitt.
- Fig. 2:: Die nicht erfindungsgemäße Ausführungsform aus Figur 1 in Ausfahrlage.
- Fig. 3:: Die nicht erfindungsgemäße Ausführungsform gemäß Figur 1 und 2 an einem Griff montiert mit Antrieb.
- Fig. 4:: Ein nicht erfindungsgemäßes Dichtelement gemäß Figur 1 bis 3.
- Fig. 5:: Eine weitere nicht erfindungsgemäße Ausführungsform gemäß Anspruch 1.
- Fig. 6:: Eine Ausführungsform der Erfindung gemäß Anspruch 1.

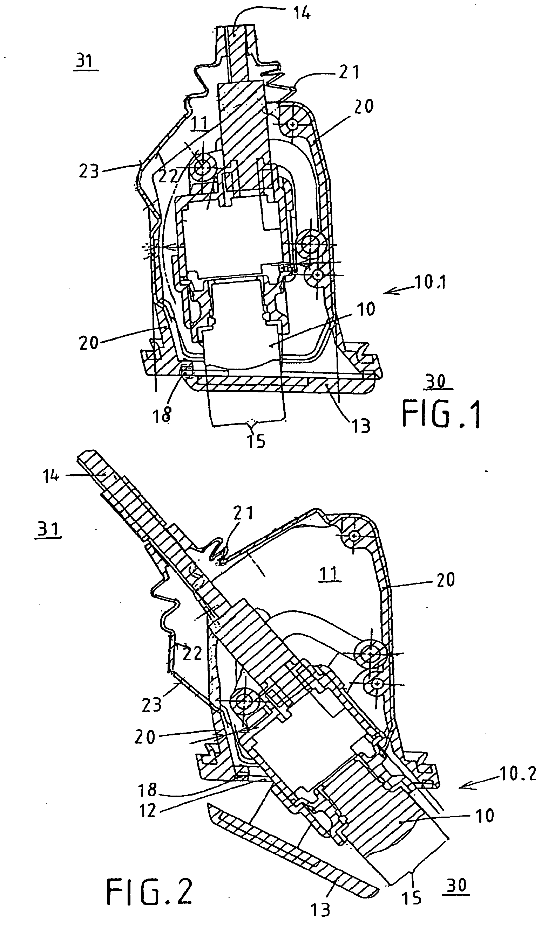

Figuren 1 und 2 zeigen eine nicht erfindungsgemäße Ausführungsform der Kameraeinrichtung gemäß Anspruch 1. In Figur 1 ist die Kameraeinrichtung in Einfahrlage 10.1 der Kamera 10 gezeigt. Die Klappe 13 schließt die Öffnung 12. Im Bereich der Öffnung 12 ist ein Dichtorgan 18 vorgesehen, welches den Kameraraum 11 in der Einfahrlage 10.1 der Kamera 10 gegenüber dem Außenbereich 30 abdichtet. So wird verhindert, dass in der Einfahrlage 10.1 der Kamera 10 Schmutz und/oder Feuchtigkeit in den Kameraraum 11 eindringen können.

Neben dem Gehäusebauteil 20 ist ein Dichtelement 21 vorgesehen. Dieses ist hier in Form eines Balgs, nämlich eines Faltenbalgs, ausgeführt. Auch andere Balgformen sind selbstverständlich denkbar. Der Balg besteht aus einem elastischen flexiblen Material, wie beispielsweise vulkanisiertes Gummi oder auch ein spritzgegossenes Material. Selbstverständlich sind auch andere Materialen denkbar. Es ist auch möglich das Dichtelement 21 mit oder ohne den Gehäusebauteil als Zwei-Komponenten-Bauteil auszuführen. So kann das Dichtelement starre Bereiche aufweisen und dazu auch einen flexiblen elastischen Bereich, welcher für die erforderliche Beweglichkeit des Dichtelements sorgt.

Die elektrischen Leitungen 14 der Kamera 10 sind an dem Dichtelement 21 fluiddicht befestigt. Wird jetzt die Kamera 10 von ihrer in Figur 1 gezeigt Einfahrlage 10.1 in ihre in Figur 2 gezeigt Ausfahrlage 10.2 bewegt, so bewegen sich die elektrischen Leitungen 14 der Kamera 10 mit und damit auch das Dichtelement 21. Durch die Flexibilität des Dichtelements 21 ist es möglich, die gesamte Kameraeinrichtung sehr kompakt und klein auszuführen.

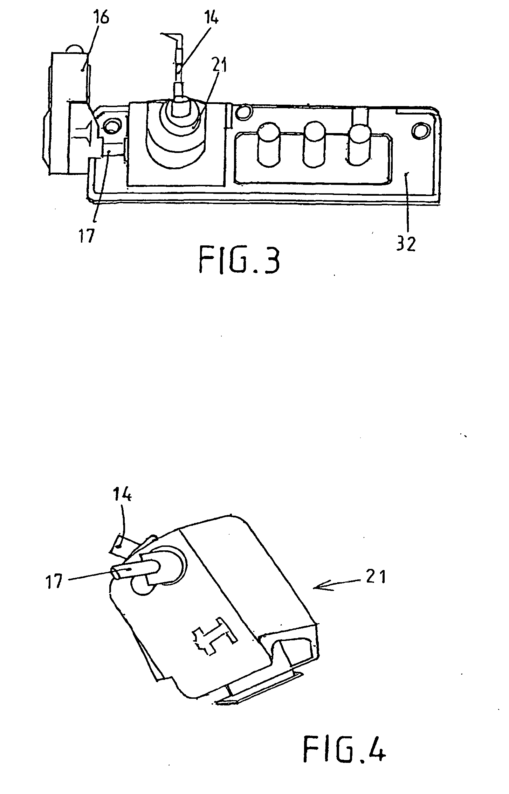

Figur 3 zeigt nun ein konkretes Anwendungsbeispiel der Ausführungsform gemäß den Figuren 1 und 2. Der Gehäusebauteil 20 sowie das Dichtelement 21 sind an einem Griff 32, hier einem Griff 32 einer Heckklappe eines Fahrzeugs, befestigt. Aus dem Dichtelement 21 ragen die elektrischen Leitungen 14 der Kamera 10 heraus. Diese ist hier nicht näher erkennbar. Es ist selbstverständlich auch denkbar, dass die Kameraeinrichtung an einer anderen Stelle montiert wird, anstatt an einem Griff 32. Hier bieten sich beispielsweise die Heckklappe, eine Beleuchtungseinrichtung, das Nummernschild, eine Stoßstange bzw. ein Stoßfänger und/oder ein Karosseriebauteil an. Auch andere Stellen am Kraftfahrzeug sind denkbar, wobei bei der Auswahl der passenden Stelle es insbesondere darauf ankommt, dass die Kamera 10 in Ihrer Ausfahrlage 10.2 den gewünschten Außenbereich des Fahrzeuges erfassen kann.

Des Weiteren ist ein Antrieb 16 vorgesehen, welcher sich jedoch außerhalb des Dichtelements 21 und der Gehäusebauteile 20 befindet. Lediglich ein Antriebselement 17, hier eine Welle, ragt in das Dichtelement 21 hinein, um dort die Kamera 10 von ihrer Einfahrlage 10.1 in ihre Ausfahrlage 10.2 und wieder zurück verfahrbar zu machen. Die Stelle wo das Antriebselement 17 in das Dichtelement 21 hineinragt ist ebenfalls fluiddicht abgedichtet.

Figur 4 zeigt nunmehr ein Dichtelement 21. Dieses kann über einen oder mehrere Gehäusebauteile 20 gestülpt werden und besteht vollständig aus einem elastischen Material. Der Bereich an dem die elektrischen Leitungen 14 der Kamera 10 aus dem Dichtelement 21 herausragen ist auch hier wieder nach Art eines Balgs, nämlich eines Faltenbalgs gestaltet. Seitlich erkennt man noch den Ansatz des Antriebselements 17 an welchen der Antrieb 16 angeschlossen werden kann um die Kamera 10 zwischen ihrer Einfahrlage 10.1 und ihrer Ausfahrlage 10.2 verfahrbar zu gestalten. Der Antrieb 16 ist hier auf der einen Seite 22 des Dichtelements 21, welche dem Innenraum 31 zugewandt ist, angeordnet, während sich die Kamera 10 auf der anderen Seite 23 des Dichtelements 21, welche dem Kameraraum 11 zugewandt ist, befindet. Selbstverständlich ist es auch möglich, den Antrieb 16 auf der gleichen Seite 22, 23 des Dichtelements 21 vorzusehen wie die Kamera 10.

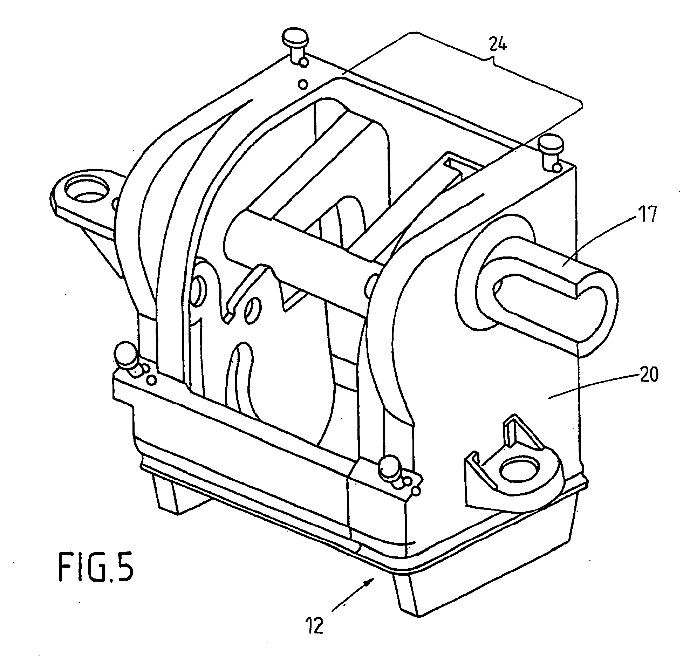

Figur 5 zeigt ein weiteres Ausführungsbeispiel. Hier sind Gehäusebauteile 20 vorgesehen in welche die Kamera 10 aufnehmbar ist. Der Antrieb 16 ist wiederum außerhalb des Gehäusebauteils 20 angeordnet, wobei ein Antriebselement 17 den Gehäusebauteil 20 durchdringt und die Kamera 10 zwischen ihrer Einfahrlage 10.1 und ihrer Ausfahrlage 10.2 verfahrbar macht. Der Gehäusebauteil 20 weist einen Durchbruch 24 auf, welcher von einem hier nicht näher gezeigten Dichtelement 21 verschließbar ist. Hierbei ist das Dichtelement 21 fluiddicht an dem Gehäusebauteil 20 befestigbar. Auch dieses Dichtelement 21 kann wiederum im Bereich der elektrischen Leitung 14 der Kamera 10 als Balg ausgebildet sein.

Insgesamt ist festzustellen, dass das Dichtelement 21 sich auf der der Kamera 10 abgewandten Seite des Gehäusebauteils 20 oder auch auf der der Kamera 10 zugewandten Seite des Gehäusebauteils 20 befinden kann. Es kann den oder die Gehäusebauteile 20 dabei vollständig umschließen bzw. von innen auskleiden. Es ist aber auch möglich das Dichtelement 21 so vorzusehen, dass es nur Durchbrüche 24 bzw. Lücken der Gehäusebauteile 20 überdeckt. Durch die Verwendung des zumindest bereichsweise flexiblen Dichtelements 21 kann so eine fluiddichte Abdichtung zwischen dem Kameraraum 11 und dem Innenraum 31 erfolgen.

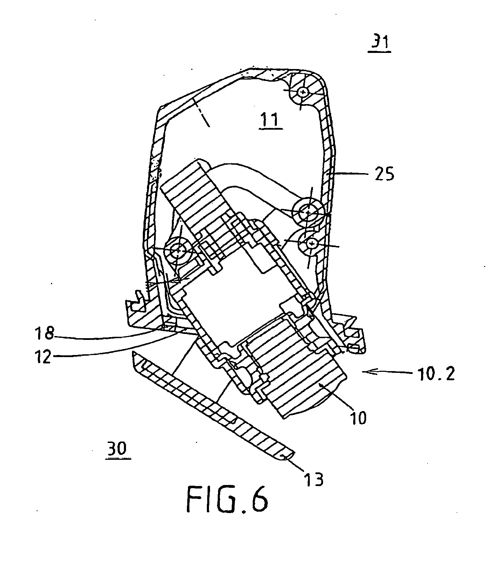

Ein Ausführungsbeispiel der Erfindung zeigt die Figur 6. Die hier dargestellte Kamera 10 verfügt nicht über elektrische Leitungen 14. Vielmehr wird sie auf induktivem Wege mit Strom versorgt. Die von der Kamera 10 erfassten Bilder können dann mittels elektromagnetischer Wellen an eine im Fahrzeug befindliche Elektronik, ein Steuergerät oder Ähnliches übertragen werden. Hierfür eignen sich die unterschiedlichsten Möglichkeiten der Übermittlung von Daten über elektromagnetische Wellen so beispielsweise Funk, Bluetooth oder Ähnliches.

Dadurch, dass es nicht notwendig ist, die elektrischen Leitungen 14 der Kamera 10 durch ein Dichtelement 21 zu führen, können die Gehäusebauteile 20 als Gehäuse 25 ausgebildet werden. Dieses Gehäuse 25 kann auch vollständig aus starrem Material sein. Im Inneren des Gehäuses 25 befindet sich dann der Kameraraum 11. Hierdurch ist es wiederum möglich, eine kompakte Baugruppe auszubilden, welche wenig Platz beansprucht. Auch kann man die Gehäusebauteile 20 bzw. das Gehäuse 25 auf einfache Art fluiddicht gestalten.

Der Antrieb 16 kann dann entweder innerhalb des Kameraraumes 11 oder außerhalb des Kameraraumes 11 vorgesehen sein. Im letzteren Fall durchdringt wiederum ein Antriebselement 17 einen Gehäusebauteil 20 bzw. das Gehäuse 25. Befindet sich der Antrieb 16 innerhalb des Kameraraumes 11, so erfolgt sie Stromübertragung zum Antrieb 16 ebenfalls auf induktivem Wege. Wird der Antrieb 16 außerhalb der Gehäusebauteile 20 bzw. des Gehäuses 25 vorgesehen, so kann die Stromübertragung auf herkömmliche Art und Weise erfolgen.

Abschließend sei noch darauf hingewiesen, dass die hier dargestellten Ausführungsformen lediglich beispielhafte Verwirklichungen der Erfindung sind. Diese ist nicht darauf beschränkt. Es sind vielmehr noch Abänderungen und Abwandlungen möglich.

### Bezugszeichenliste

- 10: Kamera
- 10.1: Einfahrlage
- 10.2: Ausfahrlage
- 11: Kameraraum
- 12: Öffnung
- 13: Klappe
- 14: Elektrische Leitungen von 10
- 15: Linsenbereich
- 16: Antrieb
- 17: Antriebselement
- 18: Dichtorgan
- 20: Gehäusebauteil
- 21: Dichtelement
- 22: Eine Seite von 21
- 23: Andere Seite von 21
- 24: Durchbruch von 20
- 25: Gehäuse
- 30: Außenbereich
- 31: Innenraum
- 32: Griff

## Patentansprüche

1. Kameraeinrichtung zur Bilderfassung eines Außenbereichs (30) an einem Fahrzeug,
umfassend eine Kamera (10) und einen Raum (11), in welchen die Kamera (10) zumindest bereichsweise aufnehmbar ist und welcher zum Außenbereich (30) hin eine Öffnung (12) aufweist, und mit einem Innenraum (31) des Fahrzeugs, welcher insbesondere Bereiche des Kofferraums und/oder des Fahrgastraums umfassen kann,
und wobei die Kamera (10) in eine Einfahrlage in welcher sie in dem Kameraraum (11) befindlich und die Öffnung (12) mit einer Klappe (13) od. dgl. abgedeckt ist, und in eine Ausfahrlage (10.2), in welcher die Kamera (10) Bilder des Außenbereichs (30) erfassen kann, mittels eines Antriebs (16) über eine Verfahrbewegung beweglich ist
**dadurch gekennzeichnet,**
**dass** die Energieversorgung der Kamera (10) und/oder des Antriebs (16) induktiv erfolgt und dass die Datenübertragung der Kamera (10) über elektromagnetische Wellen erfolgt
und **dass** der bzw. die Gehäusebauteile als fluiddichtes Gehäuse (26) ausgeführt sind, welches den Kameraraum (11) gegenüber dem Innenraum (31) fluiddicht abdichtet, wobei keine Anschlüsse oder elektrische Leitungen der Kamera (10) und/oder des Antriebs durch das Gehäuse (25) geführt werden.

2. Kameraeinrichtung nach Anspruch 1, **dadurch gekennzeichnet, dass** die Klappe (13) und/oder die Öffnung (12) über ein Dichtorgan (18) verfügen um den Kameraraum (11) in der Einfahrlage (10.1) der Kamera (10) gegenüber dem Außenbereich (30) abzudichten.

3. Kameraeinrichtung nach Anspruch 1 oder 2, **dadurch gekennzeichnet, dass** im Kameraraum (11) ein Ablauf wie eine Rinne, ein Schlauch oder ähnliches vorgesehen ist, durch welchen im Kameraraum (11) befindliche Feuchtigkeit in den Außenbereich (30) führbar ist.

4. Kameraeinrichtung nach einem der Ansprüche 1 bis 3, **dadurch gekennzeichnet, dass** die Einrichtung an einem Griff (32), einer Heckklappe, einer Beleuchtungseinrichtung, am Nummernschild, an einer Stoßstange bzw. Stoßfänger und/oder an einem Karosseriebauteil angeordnet ist.

## Claims

1. Camera apparatus for capturing images of an external area (30) on a motor vehicle,
comprising a camera (10) and a compartment (11) that is capable of at least partially accommodating the camera (10) and which comprises an opening (12) toward the external area (30), and having an interior space (31) of the vehicle that in particular may include areas of the car boot and/or the passenger cabin,
and wherein the camera (10) is movable using a drive unit along a travel path into a retracted position in which it is situated in the camera compartment (11) and the opening (12) is covered with a flap (13) or similar, and movable into an extended position (10.2) in which the camera (10) is able to capture images of the external area (30),
**characterised in that**
the energy for the camera (10) and/or the drive unit (16) is supplied inductively, and that the data from the camera (10) is transmitted via electromagnetic waves,
and that the one or more housing component(s) is/are constructed as a fluid-tight housing (26) that seals the camera compartment (11) off from the interior space (31) in fluid-tight manner, wherein no connections or electrical lines of the camera (10) and/or the drive unit are routed through the housing (25).

2. Camera apparatus according to claim 1, **characterised in that** the flap (13) and/or the opening (12) is/are equipped with a sealing element (18) for the purpose of sealing the camera compartment (11) off from the external area (30) when the camera (10) is in the retracted position (10.1).

3. Camera apparatus according to claim 1 or 2, **characterised in that** an outlet such as a channel, a hose or similar is provided in the camera compartment (11), via which moisture collecting in the camera compartment (11) can be drained to the external area (30).

4. Camera apparatus according to any of claims 1 to 3, **characterised in that** the device is mounted on a handle (32), a tailgate, a light assembly, on the licence plate, on the bumper, and/or on a bodywork component.

## Revendications

1. Dispositif de caméra à des fins de saisie d'image d'une zone extérieure (30) sur un véhicule automobile,
comprenant une caméra (10) et un espace (11), dans lequel la caméra (10) peut être renfermée au moins par portions et qui présente une ouverture (12) allant dans la direction de la zone extérieure (30), et comportant un espace intérieur (31) du véhicule, qui peut comprendre notamment des zones du coffre et/ou de la cabine passagers,
et dans lequel la caméra (10) est déplaçable dans une position d'escamotage, dans laquelle elle se trouve dans l'espace de caméra (11) et recouvre l'ouverture (12) avec un clapet (13) ou similaire, et dans une position de déploiement (10.2), dans laquelle la caméra (10) peut saisir des images de la zone extérieure (30), au moyen d'un entraînement via un mouvement de déplacement,
**caractérisé en ce que**
l'alimentation électrique de la caméra (10) et/ou de l'entraînement (16) se fait de manière inductive et la transmission de données de la caméra (10) se fait par ondes électromagnétiques,
et **en ce que** le ou les composants de logement sont conçus comme un logement (26) étanche aux fluides, qui étanchéifié de manière étanche aux fluides l'espace de caméra (11) par rapport à l'espace intérieur (31), dans lequel aucun raccords ou lignes électriques de la caméra (10) et/ou de l'entraînement ne sont guidés à travers le logement (25).

2. Dispositif de caméra selon les revendications 1 ou 2, **caractérisé en ce que** le clapet (13) et/ou l'ouverture (12) disposent d'un organe d'étanchéité (18) afin d'étanchéifier l'espace de caméra (11) dans la position d'escamotage (10.1) de la caméra (10) par rapport à la zone extérieure (30).

3. Dispositif de caméra selon les revendications 1 ou 2, **caractérisé en ce que** dans l'espace de caméra (11) un conduit découlement comme une rigole, un flexible ou similaire est prévu, à travers lequel l'humidité se trouvant dans l'espace de caméra (11) peut être guidée dans la zone extérieure (30).

4. Dispositif de caméra selon une des revendications 1 à 3, **caractérisé en ce que** le dispositif est disposé sur une poignée (32), un hayon, un dispositif d'éclairage, sur la plaque minéralogique, sur un pare-chocs et/ou sur un composant de carrosserie.
